# EUROPÄISCHE PATENTSCHRIFT

(11) **EP 2 721 973 B1**
(45) Veröffentlichungstag und Bekanntmachung des Hinweises auf die Patenterteilung: **23.11.2016**
(21) Anmeldenummer: 12401208.9
(22) Anmeldetag: 17.10.2012
(51) Int. Cl.: A47J 31/44

(54) **Getränkebereiter**
Beverage preparation machine
Dispositif de préparation de boissons

(43) Veröffentlichungstag der Anmeldung: 23.04.2014
(73) Patentinhaber: Miele & Cie. KG, 33332 Gütersloh (DE)
(72) Erfinder: Jungclaus, Dirk, 59302 Oelde (DE); Wüstefeld, Michael, 59555 Lippstadt (DE); van Pels, Ulrich, 33378 Rheda-Wiedenbrück (DE)

(56) Entgegenhaltungen:
- WO-A2-2009/013778

## Beschreibung

Die Erfindung betrifft einen Getränkebereiter nach dem Oberbegriff des Patentanspruches 1.

Die Druckschrift WO 2009/013778 A2 offenbart einen Getränkebereiter mit einer Abtropfschale 5A, einem Verkleidungselement 5B und einem Abtropfblech 7.

Ein derartiger Getränkebereiter kann beispielsweise ein Kaffeeautomat als Einbaugerät in einem Küchenschrank oder als frei stehendes Einzelgerät sein. Zur Abgabe des in dem Getränkebereiter hergestellten Getränkes oder eines Bestandteiles eines derartigen Getränkes dient jeweils mindestens eine Ausgabeeinrichtung. Bei dem zuvor erwähnten Kaffeeautomaten handelt es sich hierbei beispielsweise um eine Brüheinheit mit mindestens einer Ausgabedüse für Kaffeegetränke beziehungsweise um eine Dampfdüse zur Bereitstellung von Wasserdampf, der zur Herstellung von Milchschaum oder aufgeschäumten Getränken genutzt werden kann. Bei der Zubereitung des Getränkes kann es vorkommen, dass zum Beispiel durch die falsche Anwahl eines Getränkeprogrammes das unterhalb der Ausgabeeinrichtung abgestellte Gefäß überläuft oder infolge des an der Ausgabeeinrichtung gegebenen Druckes Teile des Getränkes verspritzt werden. Darüber hinaus wird ein Getränkebereiter regelmäßig gereinigt beziehungsweise entkalkt, wobei die anfallenden Flüssigkeitsreste aufgefangen werden müssen. Hierzu dient eine Abtropfschale, die sich in der Regel unterhalb eines mit Öffnungen und/oder Schlitzen versehenen Abtropfbleches befindet, auf dem das mit einem Getränk zu befüllende Gefäß abgestellt werden kann. Die Abtropfschale weist ein erhebliches Volumen auf und ragt daher zu einem wesentlichen Teil in das Geräteinnere hinein. Für den Anwender sollte die Abtropfschale beziehungsweise ihr Inhalt aus ästhetischen Gründen nicht sichtbar sein. Daher wird die Abtropfschale durch ein Verkleidungselement optisch abgedeckt, dessen Oberfläche zu dem Design des Getränkebereiters passt und die daher zumeist eine farbige Lackoberfläche aufweist, während die Abtropfschale ein optisch weniger ansprechendes Kunststoff-Formteil ist, dessen Gestaltung eher praktischen Erwägungen folgt. Ein wesentlicher Nachteil bei bislang bekannten und im Einsatz befindlichen Getränkebereitern besteht darin, dass die Abtropfschale und das Verkleidungselement als ein einteiliges Bauteil ausgeführt sind, dessen sperrige Baugröße erheblich ist. Aus diesem Grund passt die gesamte Baueinheit nicht in herkömmliche Geschirrspülmaschinen, sodass eine maschinelle Reinigung aus diesem Grund nicht möglich ist. In der Folge erhöht sich der Reinigungsaufwand für den Getränkebereiter insgesamt.

Ein Nachteil der lackierten Oberfläche des Verkleidungselementes besteht zudem darin, dass eine Reinigung in einer Geschirrspülmaschine wegen der darin zum Einsatz kommenden, teilweise aggressiven Reinigungsmittel zur Zerstörung der Oberfläche des Verkleidungselementes führen würde und daher nicht möglich ist. Auch deshalb muss bisher eine manuelle Reinigung der gesamten, aus der Abtropfschale und dem daran ausgebildeten Verkleidungselement bestehenden Baueinheit erfolgen, was nicht nur aufwendig, sondern darüber hinaus oft auch nicht so gründlich ausfällt, wie eine Reinigung in einer Geschirrspülmaschine.

Der Erfindung stellt sich somit das Problem, einen Getränkebereiter bereitzustellen, dessen durch Flüssigkeitsrückstände verunreinigte Teile sich auf einfache Weise und weitgehend maschinell reinigen lassen.

Erfindungsgemäß wird dieses Problem durch einen Getränkebereiter mit den Merkmalen des Patentanspruches 1 gelöst.

Vorteilhafte Ausgestaltungen und Weiterbildungen der Erfindung ergeben sich aus den nachfolgenden Unteransprüchen.

Die mit der Erfindung erreichbaren Vorteile bestehen neben einer wesentlich verbesserten Handhabung und verbesserten gestalterischen Möglichkeiten auch darin, dass die Einzelteile überwiegend in einem Geschirrspülautomaten gereinigt und damit manuelle Tätigkeiten auf ein Mindestmaß reduziert werden können.

Neben dem Umstand, dass das Verkleidungselement unmittelbar lösbar mit der Abtropfschale verbunden werden kann, geht die Erfindung dahin,
einen Hilfsrahmen zwischen Abtropfschale und Verkleidungselement vorzusehen, der seinerseits das Verkleidungselement lösbar aufnimmt. Der Hilfsrahmen ist in diesem Fall ebenfalls lösbar mit der Abtropfschale verbunden, was die wesentlichen Vorteile hat, dass sämtliche der genannten Bauteile ohne großen Aufwand voneinander getrennt und wieder zusammengesetzt werden können und damit ihre Reinigung in entscheidendem Maße vereinfacht wird. Eine lösbare Verbindung kann im Sinne der Erfindung jede Art lösbarer Verbindungen sein, also beispielsweise auch eine Schraub- Klemm- oder Steckverbindung. Insbesondere mit Hinblick auf technisch weniger versierte Nutzer ist es von Vorteil, wenn die Abtropfschale oder der Hilfsrahmen mindestens eine Justiereinrichtung zur lagegenauen Positionierung und/oder Fixierung des Verkleidungselementes aufweist beziehungsweise wenn die Abtropfschale und der Hilfsrahmen mindestens eine Justiereinrichtung zur lagegenauen Positionierung und/oder Fixierung des Verkleidungselementes aufweisen. Auf diese Weise lassen sich die einzelnen Bauelemente mit wenigen Arbeitsschritten zusammensetzen oder demontieren. Die Justiereinrichtung leistet hierbei einen wesentlichen Beitrag zur Vereinfachung des Getränkebereiters und verhindert gleichzeitig einen fehlerhaften Zusammenbau, der unter Umständen auch zu einer Fehlfunktion führen könnte.

Gemäß einer besonderen Weiterbildung dieses Vorschlages wird davon ausgegangen, dass die Justiereinrichtung als ein in eine korrespondierende Ausnehmung eingreifender Rasthaken, als ein Klemmelement oder als eine Ausformung ausgeführt ist. Allgemein ausgedrückt wird an einem der miteinander korrespondierenden Bauteile jeweils eine Ausnehmung vorgesehen, in die ein passendes Gegenstück in Form der genannten Ausgestaltungen immer nur dann eingreift, wenn die Bauteile passgenau und lagegenau zusammengesetzt worden sind. Anderenfalls ist eine Montage nicht möglich. Unter einer Ausformung kann dabei beispielsweise eine nockenartige Erhebung verstanden werden. Mit anderen Worten soll hier eine form- oder kraftschlüssige Verbindung hergestellt werden.

Entsprechend einem weiterführenden Erfindungsgedanken ist es möglich, an dem Verkleidungselement oder an dem Hilfsrahmen einen Stützflansch auszubilden, der sich an einer korrespondierenden Gegenfläche der Abtropfschale abstützt. Mit dieser Maßnahme sind gleich mehrere Vorteile erreichbar. Einerseits wird die Stabilität der zumeist aus Kunststoffen bestehenden Einzelteile erhöht und andererseits lässt sich zum Beispiel der Stützflansch so ausführen, dass er einen Bestandteil einer miteinander korrespondierenden Magnetverbindung mit der Abtropfschale aufweist. Durch diese Maßnahme wird folglich eine zusätzliche Fixierung des Hilfsrahmens und/oder des Verkleidungselementes an der Abtropfschale erreicht.

Eine besondere Ausgestaltung dieser Lösung ist darin zu sehen, dass die Magnetverbindung aus einem Elektro- oder Permanentmagneten und einem ferromagnetischen Gegenstück besteht.

Die elektromagnetische Verbindung kann dabei gleichzeitig zur Sensierung des Vorhandenseins und der passgenauen Verbindung des Verkleidungselementes oder des Hilfsrahmens mit der Abtropfschale genutzt werden. Darüber hinaus lässt sich die Verkleidung und/oder der Hilfsrahmen auf diese Weise "per Knopfdruck" lösen oder fixieren, was einen wesentlichen Komfortvorteil darstellt.

Ein Permanentmagnet hat dem gegenüber den Vorzug, dass er in nahezu jeder Magnetstärke verfügbar ist und eine kostengünstige Alternative zu einem Elektromagneten darstellt.

Als spezielle Variante dieses Vorschlages ist eine Lösung anzusehen, die darin besteht, dass die Magnetverbindung aus einem Elektro- oder Permanentmagneten an der Abtropfschale und einem ferromagnetischen Gegenstück am Stützflansch besteht. Im einfachsten Fall kann es sich bei dem ferromagnetischen Gegenstück um eine metallische Platte oder Schraube handeln.

Im Zuge des Bestrebens, den Getränkebereiter wesentlich zu vereinfachen, wird darüber hinaus erfindungsgemäss vorgesehen, dass das Verkleidungselement oder der Hilfsrahmen ein zum Abstellen eines Gefäßes geeignetes und mit Öffnungen ausgestattetes Abtropfblech zur Abdeckung der Abtropfschale aufweist. Neben der Möglichkeit, ein entsprechendes Abtropfblech in den Hilfsrahmen einzusetzen kann dieses folglich unmittelbar in einer hierfür geeigneten und passenden Vertiefung des Verkleidungselementes aufgenommen werden. Die lösbare Verbindung zwischen Abtropfblech und Verkleidungselement beziehungsweise zwischen Hilfsrahmen und Abtropfblech ermöglicht zudem eine Trennung der genannten Bauteile, sodass das Abtropfblech ebenfalls in einem Geschirrspülautomaten gereinigt werden kann. Darüber hinaus ist erforderlichenfalls der Ersatz des Abtropfbleches ohne Weiteres realisierbar.

Aus ästhetischen Gründen ist es vorteilhaft, wenn an den sichtbaren Außenseiten des Hilfsrahmens oder an dem Verkleidungselement eine Blende angesetzt ist. Diese Blende kann dabei eine lackierte Oberfläche aufweisen und lösbar mit dem Hilfsrahmen oder mit dem Verkleidungselement verbunden sein.

Eine andere Ausführungsform besteht darin, dass die Blende einstückig mit dem Hilfsrahmen oder mit dem Verkleidungselement ausgeführt ist. Wird die Blende mit dem Hilfsrahmen einstückig ausgeführt, ist eine lackierte Oberfläche der Blende nicht sinnvoll, um eine Reinigung des Hilfsrahmens in einem Geschirrspülautomaten zu gewährleisten.

Da es die Aufgabe der Erfindung ist, eine möglichst einfache, gründliche sowie von manuellen Tätigkeiten weitgehend befreite Reinigung der zu Verschmutzungen neigenden Bauteile zu ermöglichen, geht ein wesentlicher Aspekt der Erfindung dahin, zumindest die Abtropfschale und das Abtropfblech aus einem Werkstoff herzustellen, der geeignet ist, eine Reinigung in einer Geschirrspülmaschine durchzuführen, ohne dass hierbei Qualitätseinbußen zu befürchten sind. Selbstverständlich ist es von Vorteil, wenn auch der Hilfsrahmen in einem derartigen Geschirrspüler gereinigt werden kann.

Dem entsprechend besteht ein wesentlicher Vorzug darin, die Abtropfschale, den Hilfsrahmen und das Abtropfblech aus einem Kunststoff oder einem Kunststoff-Verbundwerkstoff zu erzeugen. Diese Werkstoffe weisen darüber hinaus ein geringes Gewicht und eine hohe chemische Beständigkeit auf. Zudem sind sie thermisch stabil und begrenzt elastisch, was eine nahezu zerstörungsfreie Belastbarkeit gewährleistet.

Ein wesentlicher Aspekt beim Betrieb eines Getränkebereiters besteht in der Gerätesicherheit. Mit anderen Worten muss ein derartiger Getränkebereiter so ausgeführt sein, dass selbst ungeübten Personen, also Laien, eine Handhabung möglich ist und sie keine Verletzungen erleiden. Da hinter dem Verkleidungselement je nach Ausführung des Getränkebereiters heiße oder bewegliche Bauteile vorhanden sein können, sollte unbedingt ein unbefugtes Eingreifen in das Geräteinnere verhindert werden. Hitze erzeugende Bestandteile eines Getränkebereiters sind vorwiegend bei Kaffeeautomaten gegeben, während auch Kälte, wie sie beispielsweise in Saft- oder Softdrinkautomaten genutzt wird, zu schmerzhaften Verletzungen führen kann. Eine andere Gefahr besteht bei jedem Getränkebereiter darin, dass sich hinter den Verkleidungsteilen auch scharfkantige Elemente befinden können. Der Sicherheitsaspekt ist folglich von entscheidender Bedeutung, weshalb mit einer Ausgestaltung der Erfindung vorgeschlagen wird, dass der Getränkebereiter eine Sensoreinrichtung zur Sensierung des Verkleidungselementes aufweist. Hiermit soll erreicht werden, dass der Getränkebereiter nur bei korrekt eingesetztem Verkleidungselement in Betrieb genommen werden kann. Eine derartige Sensierung kann in einer Anzeigevorrichtung, also beispielsweise in einem Display, auch zur Anzeige einer Fehlermeldung bei nicht korrekt montiertem Verkleidungselement genutzt werden.

Als Sensoreinrichtung kann beispielsweise ein Mikroschalter zum Einsatz kommen, wobei natürlich auch andere elektrische oder elektronische Bauelemente verwendbar sind, ohne den Bereich der Erfindung zu verlassen.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen Getränkebereiter am Beispiel eines Kaffeautomaten in perspektivischer Ansicht,
- Figur 2:: eine Abtropfschale mit einem Verkleidungselement und einer darin eingesetzten Abtropfplatte als isolierter Teilzusammenbau,
- Figur 3:: die Darstellung aus Figur 2 in einer Ansicht von der Rückseite her,
- Figur 4:: eine Explosivdarstellung eines Teilzusammenbaus aus den Figuren 2 und 3 in räumlicher Ansicht
- Figur 5:: die Darstellung aus Figur 4 in einer Ansicht von unten
und
- Figur 6:: ein Abtropfschale als Einzelteil und in einer räumlichen Perspektive.

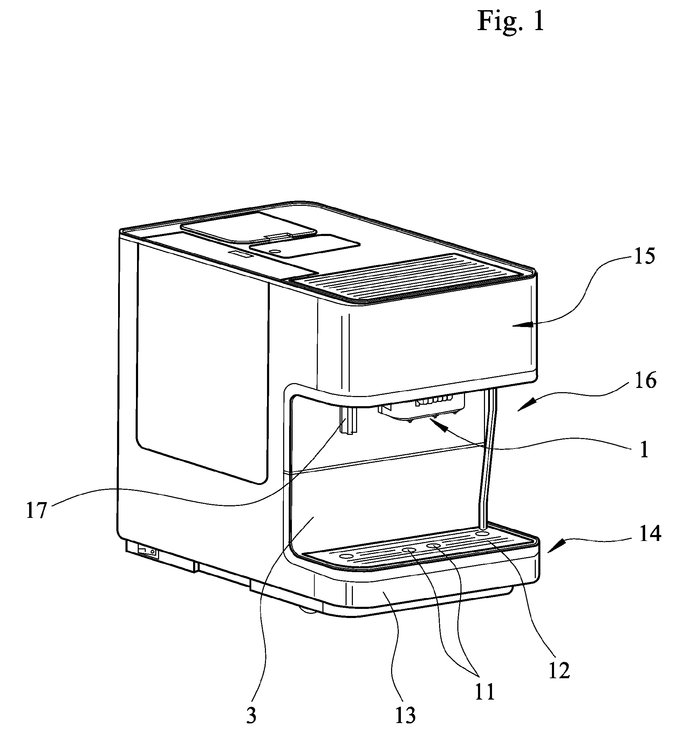

Die Figur 1 zeigt zunächst einen Getränkebereiter am Beispiel eines Kaffeautomaten in perspektivischer Ansicht. Dieser als Einzelgerät dargestellte Getränkebereiter verfügt über eine Ausgabeeinrichtung 1, die mehrere Düsen zur Abgabe eines Kaffeegetränkes oder eines Kaffeemischgetränkes aufweist. Die Ausgabeeinrichtung 1 und eine weitere Ausgabeeinrichtung in Form einer Heißwasserdüse 17 sind geschützt unterhalb eines Vorbaus 15 untergebracht. Zum Befüllen eines Gefäßes mit dem erzeugten Getränk muss dieses unterhalb der Ausgabeeinrichtungen 1, 17 abgestellt werden. Hierzu verfügt der Getränkebereiter über einen Vorsprung 14, so dass zwischen dem Vorsprung 14 und dem Vorbau 15 eine Nische 16 entsteht.

Im Bereich der Nische 16 verfügt der Getränkebereiter zudem über ein Verkleidungselement 3, das mit einer lackierten Oberfläche versehen ist. Das Verkleidungselement 3 weist hierbei eine etwa L-förmige Querschnittsgeometrie auf und ist lösbar in einem in der Figur 1 nicht näher bezeichneten Hilfsrahmen 4 aufgenommen. Es ist ein Abtropfblech 12 vorhanden, auf dem das bereits erwähnte Gefäß abgestellt werden kann. Das Abtropfblech 12 weist mehrere Öffnungen 11 in Form unterschiedlicher Bohrungen oder Schlitze auf, durch die Flüssigkeitsreste durch das Abtropfblech in eine darunter angeordnete Abtropfschale geleitet werden können. Das Gehäuse des Getränkebereiters weist aus ästhetischen Gründen insgesamt eine lackierte oder veredelte Oberfläche auf, wobei im frontseitigen Bereich des Vorsprunges 14 ferner eine Blende 13 angesetzt ist, deren Oberfläche ebenfalls mit einem Lack versehen wurde oder die auf andere Weise veredelt wurde und somit eine sehr empfindliche Oberfläche ausweist.

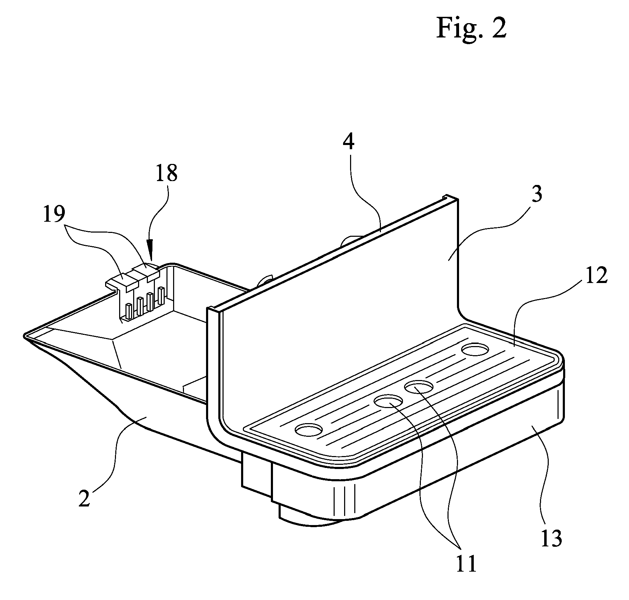

Aus der Darstellung in Figur 2 geht ein Teilzusammenbau hervor, der im vorliegenden Fall aus einer Abtropfschale 2, einem auf die Abtropfschale 2 aufgesetzten Hilfsrahmen 4 und einem von dem Hilfsrahmen 4 aufgenommenen Verkleidungselement 3 mit dem darin eingefügten und Öffnungen 11 aufweisenden Abtropfblech 12 besteht. Zur Abdeckung der Vorderseite der Abtropfschale 2 dient hierbei die bereits erwähnte Blende 13. Die Abtropfschale 2 verfügt in ihrem rückseitigen Bereich über eine Sensiereinrichtung 18, deren Signale über elektrische Kontakte 19 übertragen werden können. Diese Sensiereinrichtung 18 dient der Kontrolle des korrekten Einsatzes der Abtropfschale 2 in den Getränkebereiter. Darüber hinaus kann diese Sensiereinrichtung 18 für eine Füllstandsmessung der Abtropfschale 2 verwendet werden.

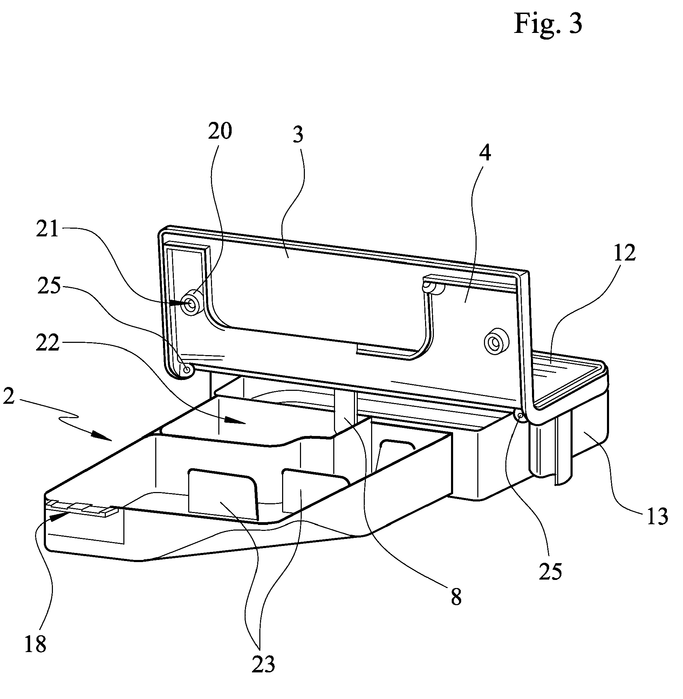

Der Teilzusammenbau aus Figur 2 ist in einer rückwärtigen Ansicht noch einmal in der Figur 3 veranschaulicht. Hieraus geht der Aufbau der Abtropfschale 2 detaillierter hervor, als aus der Figur 2. Die Abtropfschale 2 verfügt bei diesem Beispiel über eine in ihrem Innenraum vorhandene Auffangschale 22, die bei dem als Kaffeeautomaten ausgeführten Getränkebereiter zum Auffangen der Kaffeereste dient. Darüber hinaus ist der Innenraum der Abtropfschale 2 mit mehreren Schwallschutzwänden 23 ausgestattet, die dazu dienen, beim Herausnehmen der gefüllten Abtropfschale 2 aus dem Getränkebereiter ein Überschwappen der darin enthaltenen Flüssigkeitsreste in den Innenraum des Getränkebereiters zu verhindern. Die erfindungsgemäße Besonderheit besteht bei der in Figur 3 dargestellten Variante darin, dass das Verkleidungselement 3 in einen Hilfsrahmen 4 eingesetzt ist, der seinerseits lösbar auf den vorderen Bereich der Abtropfschale 2 aufgesetzt wurde. Zur Verbindung des Verkleidungselementes 3 mit dem Hilfsrahmen 4 verfügt das Verkleidungselement 3 hier über mehrere Stifte 21, die an seiner Rückseite einstückig angeformt sind. Diese Stifte 21 werden im Sinne einer Klemmverbindung in hierzu passende und an dem Hilfsrahmen 4 vorhandene, hülsenförmige Flansche 20 eingesetzt. Alternativ hierzu oder ergänzend kann jedoch zur Verbindung des Hilfsrahmens 4 mit dem Verkleidungselement 3 eine Schraubverbindung gewählt werden, die aus Vereinfachungsgründen in der Figur 3 ebenfalls angedeutet ist und mit dem Bezugszeichen 25 versehen wurde. An der Unterseite des Hilfsrahmens 4 ist ferner ein Stützflansch 8 vorhanden, der den Hilfsrahmen 4 in der Abtropfschale 2 abstützt und in einer nachfolgend noch näher zu beschreibenden Weise fixiert.

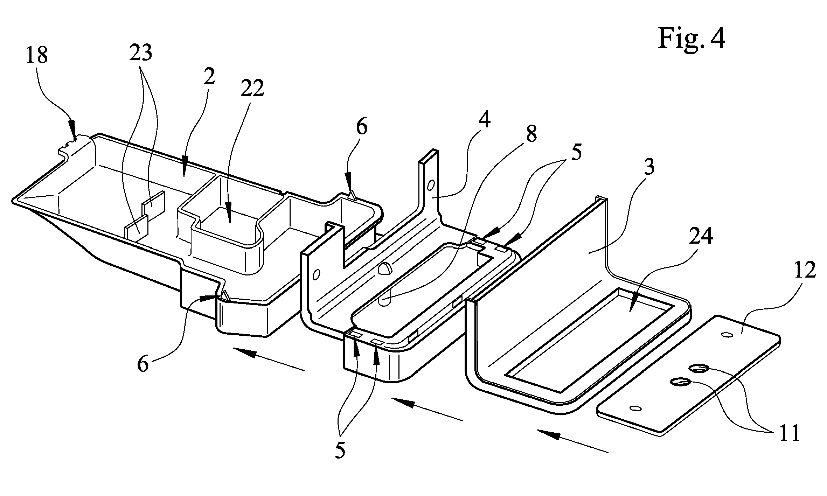

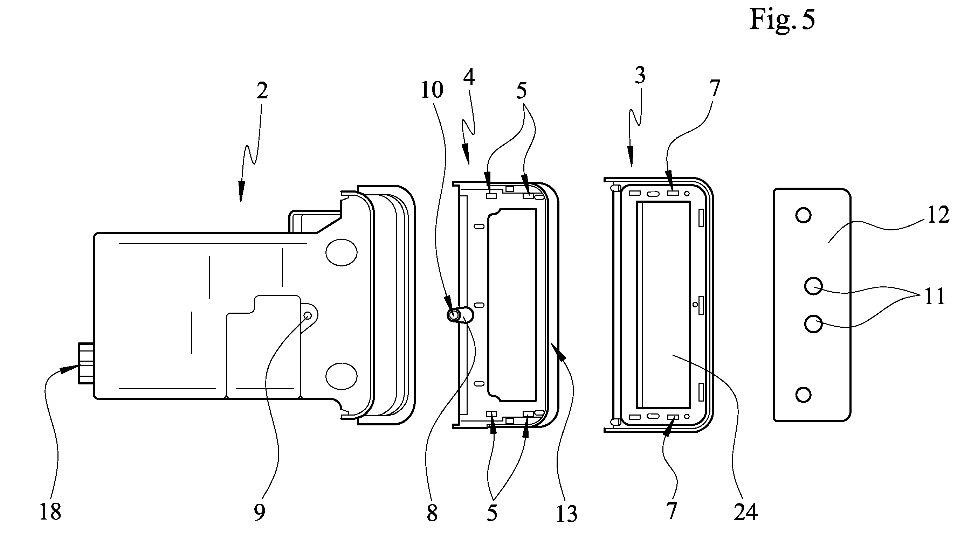

So geht aus der Figur 4 eine Explosivdarstellung des in den Figuren 2 und 3 dargestellten Teilzusammenbaus in perspektivischer Ansicht hervor. Hieraus ist noch einmal deutlich der Aufbau der Abtropfschale 2 mit den darin enthaltenen Schwallschutzwänden 23, der Auffangschale 22 und der Sensiereinrichtung 18 erkennbar. Eine wesentliche Besonderheit der Abtropfschale 2 besteht darin, dass sie in ihrem frontseitigen Randbereich zwei, einander gegenüberliegend angeordnete Rasthaken 6 aufweist. Die Rasthaken 6 dienen dazu, in je eine der am Hilfsrahmen 4 vorhandenen Ausnehmungen 5 einzugreifen, wenn der Hilfsrahmen 4 in korrekterweise auf die Abtropfschale 2 aufgesetzt wurde. Auf diese einfache Weise wird eine lösbare Fixierung zwischen der Abtropfschale 2 und dem Hilfsrahmen 4 geschaffen. Darüber hinaus verfügt der Hilfsrahmen 4 über zwei weitere Ausnehmungen 5, die der Aufnahme einer unterhalb des Verkleidungselementes 3 vorhandenen, nockenförmigen Ausformung 7 dienen, deren Anordnung anschaulicher aus der Figur 5 hervorgeht. Das Verkleidungselement 3 verfügt darüber hinaus über eine Einsatzöffnung 24, die dazu geeignet ist, das Abtropfblech 12 formschlüssig, lösbar und fest sitzend aufzunehmen.

Die Figur 5 ist eine Darstellung des Teilzusammenbaus aus Figur 4, jedoch in einer Ansicht von unten. Im Unterschied zu der Figur 4 geht hieraus deutlich hervor, dass das Verkleidungselement 3 an seiner Unterseite über zwei nockenartige Ausformungen 7 verfügt, die bei auf dem Hilfsrahmen 4 aufgesetztem Verkleidungselement 3 in die hierzu korrespondierenden Ausnehmungen 5 eingreifen und damit eine lösbare Verbindung zwischen dem Verkleidungselement 3 und dem Hilfsrahmen 4 schaffen. Darüber hinaus geht aus der Figur 5 hervor, dass an der Abtropfschale 2 ein Magnet 9 vorhanden ist, zu dem korrespondierend an der Unterseite des Stützflansches 8 ein ferromagnetisches Gegenstück 10 angeordnet ist. Bei dem ferromagnetischen Gegenstück handelt es sich hierbei um eine metallische Platte oder Schraube. Die Blende 13 wurde hierbei als ein einstückiger Bestandteil des Hilfsrahmens 4 ausgeführt.

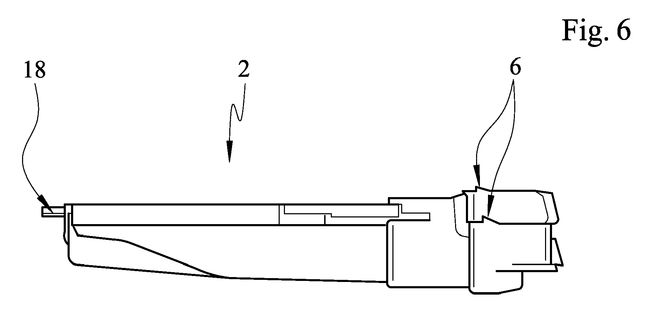

Aus der Figur 6 ist deutlich entnehmbar, wie die Rasthaken 6 an zwei einander gegenüberliegenden Abschnitten des Randbereiches der Abtropfschale 2 angeordnet sind, wobei die Rasthaken 6 bereits bei der Fertigung der Abtropfschale 2 unmittelbar angeformt werden können, was bei einer Herstellung der Abtropfschale 2 aus einem Kunststoff in fertigungstechnisch einfacher Weise möglich ist.

### BEZUGSZEICHENLISTE:

- 1: Ausgabeeinrichtung
- 2: Abtropfschale
- 3: Verkleidungselement
- 4: Hilfsrahmen
- 5: Ausnehmung
- 6: Rasthaken
- 7: Ausformung
- 8: Stützflansch
- 9: Magnet
- 10: ferromagnetisches Gegenstück
- 11: Öffnung
- 12: Abtropfblech
- 13: Blende
- 14: Vorsprung
- 15: Vorbau
- 16: Nische
- 17: Heißwasserdüse
- 18: Sensiereinrichtung
- 19: elektrische Kontakte
- 20: hülsenförmiger Flansch
- 21: Stift
- 22: Auffangschale
- 23: Schwallschutzwand
- 24: Einsatzöffnung
- 25: Schraube

## Patentansprüche

1. Getränkebereiter mit einer Ausgabeeinrichtung (1) für ein Getränk oder einen Bestandteil eines Getränkes, einer dieser zugeordneten Abtropfschale (2) zum Auffangen von Flüssigkeitsresten und mindestens einem Verkleidungselement (3) der Abtropfschale (2), wobei das Verkleidungselement (3) lösbar mit der Abtropfschale (2) verbunden ist,
**dadurch gekennzeichnet,**
**dass** ein das Verkleidungselement (3) lösbar aufnehmender Hilfsrahmen (4) lösbar mit der Abtropfschale (2) verbunden ist und dass das Verkleidungselement (3) oder der Hilfsrahmen (4) ein zum Abstellen eines Gefäßes geeignetes und mit Öffnungen (11) ausgestattetes Abtropfblech (12) zur Abdeckung der Abtropfschale (2) aufweist.

2. Getränkebereiter nach Anspruch 1,
**dadurch gekennzeichnet, dass**
die Abtropfschale (2) und/oder der Hilfsrahmen (4) mindestens eine Justiereinrichtung zur lagegenauen Positionierung und/oder Fixierung des Verkleidungselementes (3) aufweist beziehungsweise aufweisen.

3. Getränkebereiter nach Anspruch 2,
**dadurch gekennzeichnet, dass**
die Justiereinrichtung als ein in eine korrespondierende Ausnehmung (5) eingreifender Rasthaken (6), als ein Klemmelement oder als eine Ausformung (7) ausgeführt ist.

4. Getränkebereiter nach einem der vorstehend genannten Ansprüche,
**dadurch gekennzeichnet, dass**
an dem Verkleidungselement (3) oder an dem Hilfsrahmen (4) ein Stützflansch (8) ausgebildet ist.

5. Getränkebereiter nach Anspruch 4,
**dadurch gekennzeichnet, dass**
der Stützflansch (8) einen Bestandteil einer miteinander korrespondierenden Magnetverbindung mit der Abtropfschale (2) aufweist.

6. Getränkebereiter nach Anspruch 5,
**dadurch gekennzeichnet, dass**
die Magnetverbindung aus einem Elektro- oder Permanentmagneten und einem ferromagnetischen Gegenstück besteht.

7. Getränkebereiter nach Anspruch 5 oder 6,
**dadurch gekennzeichnet, dass**
die Magnetverbindung aus einem Elektro- oder Permanentmagneten (9) an der Abtropfschale (2) und einem ferromagnetischen Gegenstück (10) am Stützflansch (8) besteht.

8. Getränkebereiter nach einem der Ansprüche 2 bis 7,
**dadurch gekennzeichnet, dass**
an den sichtbaren Außenseiten des Hilfsrahmens (4) oder an dem Verkleidungselement (3) eine Blende (13) vorhanden ist.

9. Getränkebereiter nach Anspruch 8,
**dadurch gekennzeichnet, dass**
die Blende (13) ein einteiliger Bestandteil des Hilfsrahmens (4) oder des Verkleidungselementes (3) ist.

10. Getränkebereiter nach einem der Ansprüche 2 bis 9,
**dadurch gekennzeichnet, dass**
die Abtropfschale (2), der Hilfsrahmen (4) und das Abtropfblech (12) aus einem Werkstoff bestehen, der für eine Reinigung in einer Geschirrspülmaschine geeignet ist.

11. Getränkebereiter nach Anspruch 10,
**dadurch gekennzeichnet, dass**
die Abtropfschale (2) und der Hilfsrahmen (4) aus einem Kunststoff oder einem Kunststoff-Verbundwerkstoff bestehen.

12. Getränkebereiter nach einem der vorstehend genannten Ansprüche,
**dadurch gekennzeichnet, dass**
der Getränkebereiter eine Sensoreinrichtung zur Sensierung des Verkleidungselementes (3) aufweist.

13. Getränkebereiter nach Anspruch 12,
**dadurch gekennzeichnet, dass**
die Sensoreinrichtung einen Mikroschalter aufweist.

## Claims

1. Beverage preparation machine comprising a dispensing device (1) for a beverage or an ingredient of a beverage, a drip tray (2) associated therewith in order to collect any liquid residues, and at least one cover element (3) of the drip tray (2), the cover element (3) being detachably connected to the drip tray (2),
**characterised in that**
a subframe (4) which detachably receives the cover element (3) is detachably connected to the drip tray (2) and **in that** the cover element (3) or the subframe (4) has a drip plate (12) for covering the drip tray (2) upon which a container can be placed and which is provided with openings (11).

2. Beverage preparation machine according to claim 1,
**characterised in that**
the drip tray (2) and/or the subframe (4) has/have at least one adjusting device in order to ensure the precise positioning and/or fixing of the cover element (3).

3. Beverage preparation machine according to claim 2,
**characterised in that**
the adjusting device is designed as a catch hook (6) engaging in a corresponding recess (5), as a clamping member or as a moulded portion (7).

4. Beverage preparation machine according to any of the preceding claims,
**characterised in that**
a support flange (8) is formed on the cover element (3) or the subframe (4).

5. Beverage preparation machine according to claim 4,
**characterised in that**
the support flange (8) comprises a component of a mutually corresponding magnetic connection to the drip tray (2).

6. Beverage preparation machine according to claim 5,
**characterised in that**
the magnetic connection consists of an electro- or permanent magnet and a ferromagnetic counterpart.

7. Beverage preparation machine according to either claim 5 or claim 6,
**characterised in that**
the magnetic connection consists of an electro- or permanent magnet (9) on the drip tray (2) and a ferromagnetic counterpart (10) on the support flange (8).

8. Beverage preparation machine according to any of claims 2 to 7,
**characterised in that**
there is a panel (13) on the visible exterior of the subframe (4) or on the cover element (3).

9. Beverage preparation machine according to claim 8,
**characterised in that**
the panel (13) is an integral component of the subframe (4) or the cover element (3).

10. Beverage preparation machine according to any of claims 2 to 9,
**characterised in that**
the drip tray (2), the subframe (4) and the drip plate (12) are made of material which is suitable for being cleaned in a dishwasher.

11. Beverage preparation machine according to claim 10,
**characterised in that**
the drip tray (2) and the subframe (4) are made of plastics or a plastics composite material.

12. Beverage preparation machine according to any of the preceding claims,
**characterised in that**
the beverage preparation machine has a sensor device for sensing the cover element (3).

13. Beverage preparation machine according to claim 12,
**characterised in that**
the sensor device has a microswitch.

## Revendications

1. Appareil de préparation de boissons avec un moyen de distribution (1) pour une boisson ou un ingrédient d'une boisson, avec un bac d'égouttement (2), associé au moyen de distribution afin de collecter les restes de liquide, et au moins un élément d'habillage (3) du bac d'égouttement (2), dans lequel l'élément d'habillage (3) est relié de manière amovible au bac d'égouttement (2),
**caractérisé en ce que**
un cadre auxiliaire (4) permettant de recevoir l'élément d'habillage (3) de manière amovible est relié de manière amovible au bac d'égouttement (2) et **en ce que** l'élément d'habillage (3) ou le cadre auxiliaire (4) présente une tôle d'égouttement (12) destinée à recouvrir le bac d'égouttement (2), laquelle tôle d'égouttement est pourvue d'ouvertures (11) et adaptée à la pose d'un récipient.

2. Appareil de préparation de boissons selon la revendication 1,
**caractérisé en ce que**
le bac d'égouttement (2) et/ou le cadre auxiliaire (4) présente, respectivement présentent, au moins un moyen de réglage destiné au positionnement exact et/ou à la fixation de l'élément d'habillage (3).

3. Appareil de préparation de boissons selon la revendication 2,
**caractérisé en ce que**
le moyen de réglage est conçu comme un élément de serrage, comme un façonnement (7) ou comme un crochet de verrouillage (6) venant se mettre en prise dans une cavité (5) correspondante.

4. Appareil de préparation de boissons selon l'une des revendications précédemment citées,
**caractérisé en ce que**
une bride de soutien (8) est conçue au niveau de l'élément d'habillage (3) ou au niveau du cadre auxiliaire (4).

5. Appareil de préparation de boissons selon la revendication 4,
**caractérisé en ce que**
la bride de soutien (8) présente un élément d'une liaison aimantée avec le bac d'égouttement (2), laquelle liaison aimantée est en relation l'une avec l'autre.

6. Appareil de préparation de boissons selon la revendication 5,
**caractérisé en ce que**
la liaison aimantée est constituée d'un aimant électrique ou d'un aimant permanent et d'une pièce complémentaire ferromagnétique.

7. Appareil de préparation de boissons selon la revendication 5 ou 6,
**caractérisé en ce que**
la liaison aimantée est constituée d'un aimant électrique ou d'un aimant permanent (9) au niveau du bac d'égouttement (2) et d'une pièce complémentaire ferromagnétique (10) au niveau de la bride de soutien (8).

8. Appareil de préparation de boissons selon l'une des revendications 2 à 7,
**caractérisé en ce que**
un cache (13) est présent au niveau des parties extérieures apparentes du cadre auxiliaire (4) ou au niveau de l'élément d'habillage (3).

9. Appareil de préparation de boissons selon la revendication 8,
**caractérisé en ce que**
le cache (13) est un élément d'une seule pièce du cadre auxiliaire (4) ou de l'élément d'habillage (3).

10. Appareil de préparation de boissons selon l'une des revendications 2 à 9,
**caractérisé en ce que**
le bac d'égouttement (2), le cadre auxiliaire (4) et la tôle d'égouttement (12) sont composés d'un matériau qui est adapté pour un nettoyage au lave-vaisselle.

11. Appareil de préparation de boissons selon la revendication 10,
**caractérisé en ce que**
le bac d'égouttement (2) et le cadre auxiliaire (4) sont composés d'un matériau en plastique ou d'un matériau composite en plastique.

12. Appareil de préparation de boissons selon l'une des revendications précédemment citées,
**caractérisé en ce que**
l'appareil de préparation de boissons présente un système de capteur destiné à la détection de l'élément d'habillage (3).

13. Appareil de préparation de boissons selon la revendication 12,
**caractérisé en ce que**
le système de capteur présente un micro-commutateur.
